# EUROPEAN PATENT APPLICATION

(11) **EP 4 738 970 A1**
(43) Date of publication of application: **06.05.2026**
(21) Application number: 23950136.4
(22) Date of filing: 30.08.2023
(51) Int. Cl.: H04W 74/08

(54) **TASK PROCESSING METHOD AND APPARATUS**

(71) Applicant: Huawei Technologies Co., Ltd., Shenzhen, Guangdong 518129 (CN)
(72) Inventor: YANG, Lu, Shenzhen, Guangdong 518129 (CN); LIU, Zhe, Shenzhen, Guangdong 518129 (CN); PENG, Chenghui, Shenzhen, Guangdong 518129 (CN)
(74) Representative: Pfenning, Meinig & Partner mbB
(86) International application number: PCT/CN2023/115821
(87) International publication number: WO 2025/043546

(57) **Abstract**

A task processing method and an apparatus are provided, pertaining to the field of communication technologies, to support a terminal device in performing task processing in an inactive state, and reduce a delay, signaling overheads, and energy consumption of performing task processing by the terminal device, so that a device in the inactive state can still participate in task processing, thereby facilitating realization of an internet of things scenario. The method includes: A first communication apparatus receives a task, where the task is a non-session task; the first communication apparatus obtains first task data obtained by executing the task; and when sending of the first task data meets a first condition, the first communication apparatus sends the first task data to a second communication apparatus based on a small data transmission mechanism. The first communication apparatus is a terminal device, and the second communication apparatus is a network device; or the first communication apparatus is a network device, and the second communication apparatus is a terminal device. The terminal device is in the inactive state.

## Description

### TECHNICAL FIELD

This application relates to the field of communication technologies, and in particular, to a task processing method and an apparatus.

### BACKGROUND

In new radio (new radio, NR), a terminal device has three different radio resource control (radio resource control, RRC) states: an idle (idle) state, an inactive (inactive) state, and a connected (connected) state. In a future-oriented intelligent inclusive scenario, a cloud (for example, a central node of cloud computing), an edge (for example, an edge device of cloud computing), a device (for example, a terminal device), and the like of a network need to collaborate to perform task processing. However, existing task processing usually requires the terminal device to be in the connected state. Therefore, a terminal device in the inactive state needs to switch to the connected state to complete task processing. Frequent state switching causes problems such as a long delay, high signaling overheads, and high energy consumption. Therefore, how to reduce a delay, signaling overheads, and energy consumption of performing task processing by the terminal device is a problem that needs to be considered.

### SUMMARY

This application provides a task processing method and an apparatus, to support a terminal device in performing task processing in an inactive state, and reduce a delay, signaling overheads, and energy consumption of performing task processing by the terminal device.

According to a first aspect, an embodiment of this application provides a task processing method. The method includes: A first communication apparatus receives a task, where the task is a non-session task, and the first communication apparatus or a second communication apparatus that participates in the task is in an inactive state; the first communication apparatus obtains first task data obtained by executing the task; and when sending of the first task data meets a first condition, the first communication apparatus sends the first task data to the second communication apparatus based on a small data transmission mechanism.

In the foregoing task processing method, the first communication apparatus may be a terminal device, a component (for example, a processor, a chip, or a chip system) of a terminal device, or an apparatus used in combination with a terminal device; and the second communication apparatus may be a network device, a component (for example, a processor, a chip, or a chip system) of a network device, or an apparatus used in combination with a network device. Alternatively, the first communication apparatus may be a network device, a component (for example, a processor, a chip, or a chip system) of a network device, or an apparatus used in combination with a network device; and the second communication apparatus may be a terminal device, a component (for example, a processor, a chip, or a chip system) of a terminal device, an apparatus used in combination with a terminal device, or the like. A communication apparatus corresponding to the terminal device, the component (for example, the processor, the chip, or the chip system) of the terminal device, or the apparatus used in combination with the terminal device is in the inactive state.

According to the foregoing method, the terminal device in the inactive state is enabled to complete the task based on the small data transmission mechanism. In comparison with a case in which the terminal device needs to switch to a connected state to perform task processing, a quantity of switching times of the terminal device between the inactive state and the connected state can be effectively reduced, thereby reducing the delay, the signaling overheads, and the energy consumption of the terminal device during task processing.

In a possible design, that sending of the first task data meets the first condition includes: a data volume of the first task data is less than or equal to a first threshold.

It may be understood that, when the first communication apparatus receives a plurality of tasks, and the first communication apparatus executes the plurality of tasks to obtain a plurality of pieces of first task data, if the first communication apparatus sends the plurality of pieces of first task data together based on the small data transmission mechanism, a total data volume of the plurality of pieces of first task data should be less than or equal to the first threshold; or if the first communication apparatus separately sends the plurality of pieces of first task data based on the small data transmission mechanism, a data volume of each first task in the plurality of pieces of first task data should be less than or equal to the first threshold.

According to the foregoing design, it can be ensured that the task data sent based on the small data transmission mechanism meets a transmission data volume threshold of the small data transmission mechanism, and reliability of task data transmission is ensured.

In a possible design, the first threshold includes a token (token) quantity threshold and/or an embedding (embedding) vector dimension threshold, and that the data volume of the first task data is less than or equal to the first threshold includes: a quantity of tokens corresponding to the first task data is less than or equal to the token quantity threshold; or an embedding vector dimension corresponding to the first task data is less than or equal to the embedding vector dimension threshold.

In AI-related tasks such as AI training and AI inference, data that needs to be transmitted over an air interface between a terminal device and a network device is a token or an embedding vector. In AI, embedding is a process of mapping high-dimensional data (for example, a text, a picture, or audio) to low-dimensional space. The embedding vector is usually a vector including real numbers, represents input data as a point in continuous numerical space, and can be used to represent almost anything, for example, a text, a picture, and audio. The token may be referred to as an identifier, a mark, or the like. In the AI, the token is usually a minimum unit in a text processing process. The token may be a word, a phrase, a sentence, another smaller text unit, or the like. One embedding vector may include one or more tokens. According to the foregoing design, the transmission data volume threshold of the small data transmission mechanism can be set according to a specific task transmission unit, to help quickly determine whether sending of the task data meets a condition of sending based on the small data transmission mechanism, and improve task processing efficiency.

In a possible design, that sending of the first task data meets the first condition further includes: quality of a channel between the first communication apparatus and the second communication apparatus is greater than or equal to a channel quality threshold of the small data transmission mechanism.

According to the foregoing design, the quality of the channel between the first communication apparatus and the second communication apparatus is further constrained, to help improve reliability of the task data transmission between the first communication apparatus and the second communication apparatus.

In a possible design, before the first communication apparatus sends the first task data to the second communication apparatus based on the small data transmission mechanism, the method further includes: The first communication apparatus sends a task initiation request to the second communication apparatus based on the small data transmission mechanism, where the task initiation request includes a task identifier of the task; and the first communication apparatus receives a task acknowledgment response sent by the second communication apparatus based on the small data transmission mechanism, where the task acknowledgment response includes the task identifier of the task.

According to the foregoing design, the first communication apparatus and the second communication apparatus are supported to request and acknowledge the task before the task data is sent. This helps the second communication apparatus learn of a task for which the task data needs to be transmitted, and improves reliability of the task data transmission between the first communication apparatus and the second communication apparatus.

In a possible design, the method further includes: The first communication apparatus sends, based on the small data transmission mechanism, the task identifier corresponding to the first task data to the second communication apparatus.

According to the foregoing design, the second communication apparatus that receives the task data is notified of the task identifier corresponding to the task data, so that the second communication apparatus can quickly learn of the task to which the task data belongs, and process the task data.

In a possible design, the first communication apparatus is a terminal device, the second communication apparatus is a network device, and that the first communication apparatus sends the first task data to the second communication apparatus based on the small data transmission mechanism includes: The first communication apparatus sends the first task data to the second communication apparatus through a random access request in a two-step random access procedure; or the first communication apparatus sends the first task data to the second communication apparatus through an RRC resume request in a four-step random access procedure; or the first communication apparatus sends the first task data to the second communication apparatus through an RRC resume request that is sent to the second communication apparatus on a configured grant resource.

According to the foregoing design, the terminal device and the network device in the inactive state are supported to transmit the task data through the random access (random access, RA) small data transmission mechanism, the configured grant (configured grant, CG) small data transmission mechanism, or the like. The random access small data transmission mechanism may include a two-step random access small data transmission mechanism and a four-step random access small data transmission mechanism.

In a possible design, the first communication apparatus is the terminal device, the second communication apparatus is the network device, and the first communication apparatus is in the inactive state. The method further includes: When sending of the first task data does not meet the first condition, the first communication apparatus switches to a connected state; and the first communication apparatus sends the first task data to the second communication apparatus based on a non-small data transmission mechanism.

According to the foregoing design, when the task data does not meet a sending condition of the small data transmission mechanism, the terminal device switches to the connected state to send the task data, so that reliability of the task data transmission between the terminal device and the network device can be improved.

In a possible design, the first communication apparatus is the terminal device, the second communication apparatus is the network device, the first communication apparatus is in the inactive state, the first task data is an N^{th} round of task data obtained by the first communication apparatus by executing the task, and N is an integer greater than or equal to 1. The method further includes: When sending of second task data does not meet the first condition, the first communication apparatus switches to a connected state, where the second task data is a K^{th} round of task data obtained by the first communication apparatus by executing the task, and K is an integer greater than N; and the first communication apparatus sends the second task data to the second communication apparatus based on a non-small data transmission mechanism.

According to the foregoing design, when a specific round of task data does not meet the sending condition of the small data transmission mechanism, the terminal device is supported to switch to the connected state to send the task data, so that the reliability of the task data transmission between the terminal device and the network device can be improved.

In a possible design, the first communication apparatus is a network device, the second communication apparatus is a terminal device, and that the first communication apparatus sends the first task data to the second communication apparatus based on the small data transmission mechanism includes: The first communication apparatus sends the first task data to the second communication apparatus through an RRC release with suspend indication, where the RRC release with suspend indication is used to respond to an RRC resume request sent by the second communication apparatus.

According to the foregoing design, the network device is supported to send the task data to the terminal device that is in the inactive state, and indicate, through the RRC release with suspend indication, the terminal device to remain in the inactive state. In comparison with a case in which the terminal device needs to switch to the connected state to perform task processing, a quantity of switching times of the terminal device between the inactive state and the connected state can be effectively reduced, thereby reducing a delay, signaling overheads, and energy consumption of the terminal device during task processing.

In a possible design, the first communication apparatus is the network device, the second communication apparatus is the terminal device, and the second communication apparatus is in the inactive state. The method further includes: When sending of the first task data does not meet the first condition, the first communication apparatus sends a paging message to the second communication apparatus, where the paging message is used to trigger the second communication apparatus to switch to a connected state; and after the second communication apparatus switches to the connected state, the first communication apparatus sends the first task data to the second communication apparatus based on a non-small data transmission mechanism.

According to the foregoing design, when the task data does not meet the sending condition of the small data transmission mechanism, the network device is supported to indicate the terminal device to switch to the connected state to perform task data transmission, so that the reliability of the task data transmission between the terminal device and the network device can be improved.

In a possible design, the first communication apparatus is the network device, the second communication apparatus is the terminal device, the second communication apparatus is in the inactive state, the first task data is an N^{th} round of task data obtained by the first communication apparatus by executing the task, and N is an integer greater than or equal to 1. The method further includes: When sending of second task data does not meet the first condition, the first communication apparatus sends a paging message to the second communication apparatus, where the paging message is used to trigger the second communication apparatus to switch to a connected state, the second task data is a K^{th} round of task data obtained by the first communication apparatus by executing the task, and K is an integer greater than N; and after the second communication apparatus switches to the connected state, the first communication apparatus sends the second task data to the second communication apparatus based on a non-small data transmission mechanism.

According to the foregoing design, when a specific round of task data does not meet the sending condition of the small data transmission mechanism, the network device is supported to indicate the terminal device to switch to the connected state to perform task data transmission, so that the reliability of the task data transmission between the terminal device and the network device can be improved.

According to a second aspect, an embodiment of this application provides a communication apparatus. The apparatus has a function of implementing the method in the first aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method in the first aspect.

According to a third aspect, an embodiment of this application provides a communication apparatus. The communication apparatus includes an interface circuit and a processor, and the processor and the interface circuit are coupled to each other. The processor is configured to implement the method in the first aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver unit, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory (that is, the processor and the memory are integrated together).

In a possible implementation, the communication apparatus is a chip.

According to a fourth aspect, an embodiment of this application provides a computer-readable storage medium. The computer-readable storage medium stores a computer program or instructions. When the computer program or the instructions are executed by a processor, the method in the first aspect can be implemented.

According to a fifth aspect, an embodiment of this application further provides a computer program product, including a computer program or instructions. When the computer program or the instructions are executed by a processor, the method in the first aspect can be implemented.

According to a sixth aspect, an embodiment of this application further provides a chip system. The chip system includes a processor. The processor is configured to be coupled to a memory. The memory is configured to store a program or instructions. When the program or the instructions are executed by the processor, the method in the first aspect can be implemented.

For technical effect that can be achieved in the second aspect to the sixth aspect, refer to the technical effect that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of RRC status switching according to an embodiment of this application;
FIG. 3 is a diagram of a two-step RA-SDT process according to an embodiment of this application;
FIG. 4 is a diagram of a four-step RA-SDT process according to an embodiment of this application;
FIG. 5 is a diagram of a CG-SDT process according to an embodiment of this application;
FIG. 6 is a diagram 1 of a task processing method according to an embodiment of this application;
FIG. 7 is a diagram 2 of a task processing method according to an embodiment of this application;
FIG. 8 is a diagram 3 of a task processing method according to an embodiment of this application;
FIG. 9 is a diagram 4 of a task processing method according to an embodiment of this application;
FIG. 10A and FIG. 10B are diagrams of task processing mechanisms according to an embodiment of this application;
FIG. 11 is a diagram 5 of a task processing method according to an embodiment of this application;
FIG. 12 is a diagram 6 of a task processing method according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

The technical solutions in embodiments of this application may be applied to various communication systems, for example, a long term evolution (long term evolution, LTE) system, an LTE-advanced (LTE-advanced, LTE-A) system, a universal mobile telecommunications system (universal mobile telecommunications system, UMTS), a 5th generation (5th generation, 5G) mobile communication system such as NR, a beyond 5G (beyond 5G, B5G) mobile communication system, a communication system evolved after 5G like a 6th generation (6th generation, 6G) mobile communication system, and the like. The communication system may alternatively be a device-to-device (device-to-device, D2D) network, a machine to machine (machine to machine, M2M) network, an internet of things (internet of things, IoT) network, or another network.

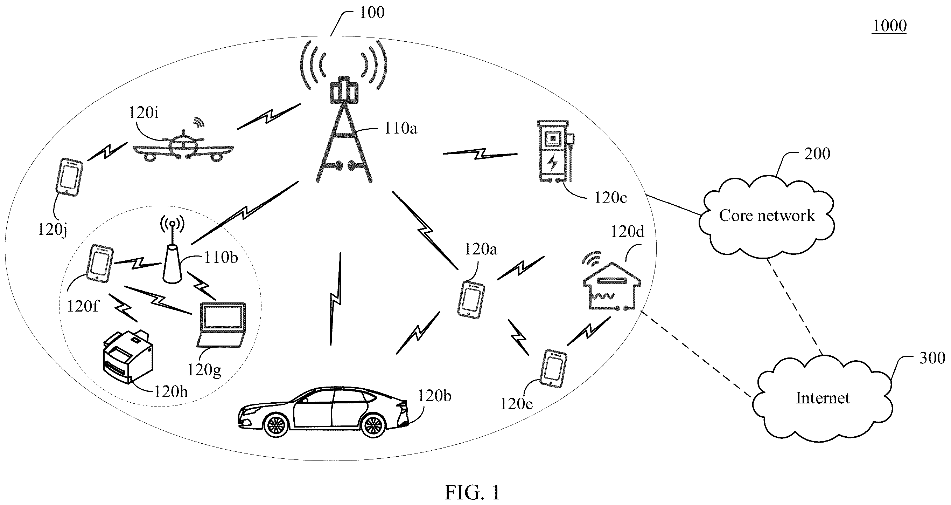

An architecture of a communication system to which embodiments of this application may be applied may be shown in FIG. 1. A communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G system, a 5G system, or a system evolved after 5G (for example, a 6G mobile communication system). Alternatively, the RAN 100 may be an open access network (open RAN, O-RAN, or ORAN) or a cloud radio access network (cloud radio access network, CRAN). The RAN 100 may alternatively be a communication system that integrates two or more of the foregoing systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in a radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, network elements 110a and 110b in FIG. 1 may be understood as communication apparatuses having a base station function, and the network elements 120a to 120j may be understood as communication apparatuses having a terminal device function.

In a possible scenario, the network device may be a base station (base station), an evolved NodeB (evolved NodeB, eNodeB), a transmission and reception point (transmission and reception point, TRP), a transmission point (transmission point, TP), a next generation NodeB (next generation NodeB, gNB), a next generation base station in a 6G mobile communication system, a base station in a future mobile communication system, a satellite, an integrated access and backhaul (integrated access and backhaul, IAB) node, or a network device in a mobile switching center-based non-terrestrial network (non-terrestrial network, NTN) communication system, that is, the network device may be deployed on a high-altitude platform, a satellite, or the like. The network device may be a macro base station (for example, 110a in FIG. 1), a micro base station or an indoor station (for example, 110b in FIG. 1), a relay node or a donor node, or a radio controller in a CRAN scenario. The network device may alternatively be a device having a base station function in device to device (device to device, D2D) communication, internet of vehicles communication, unmanned aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of network devices collaborate to assist the terminal device in implementing wireless access, and different network devices separately implement some base station functions. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus for implementing a function of a network device may be a network device, or may be an apparatus, for example, a chip system, that can support a network device to implement the function. The apparatus may be mounted in the network device or used in combination with the network device.

The terminal device 120 may also be referred to as a terminal, user equipment (user equipment, UE), a mobile station (mobile station, MS), a mobile terminal (mobile terminal, MT), or the like, or is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having functions of a terminal. For example, the terminal device may alternatively be a device that functions as a terminal in D2D communication.

A device form of the terminal device is not limited in embodiments of this application. An apparatus for implementing a function of a terminal device may be a terminal device, or may be an apparatus, for example, a chip system, that can support a terminal device to implement the function. The apparatus may be mounted in a terminal device or used in combination with a terminal device. In embodiments of this application, the chip system may include a chip, or may include a chip and another discrete device.

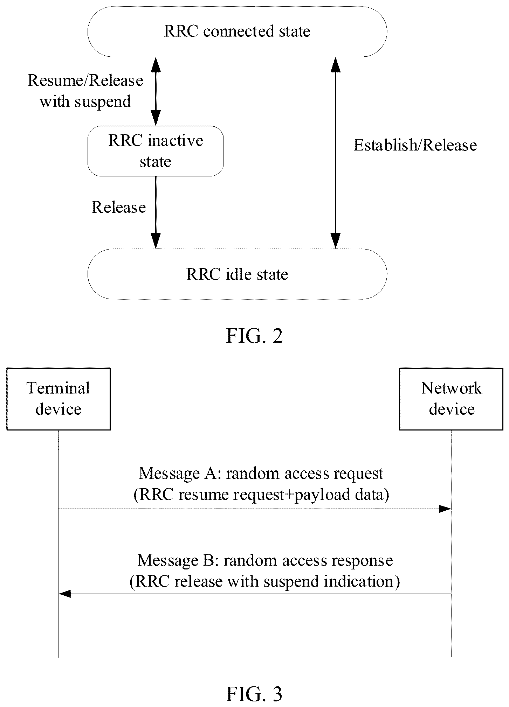

For ease of understanding by a person skilled in the art, the following explains and describes some terms in this application.
(1) Radio resource control (radio resource control, RRC) state: The terminal device has three different RRC states: an RRC idle state (RRC_ idle), an RRC inactive state (RRC_ inactive), and an RRC connected state (RRC_ connected). As shown in FIG. 2, the RRC connected state may be switched between the RRC idle state and the RRC inactive state. For example, the terminal device in the RRC idle state may request to switch to the RRC connected state by sending an RRC establish (establish) request to a network device. The terminal device in the RRC connected state may switch to the RRC idle state based on an RRC release (release) message from the network device, or may switch to the RRC inactive state based on an RRC release with suspend indication (release with suspend) from the network device. The terminal device in the RRC inactive state may request to switch to the RRC connected state by sending an RRC resume (resume) request to the network device, or may switch to the RRC idle state based on an RRC release message from the network device.

In addition, it should be understood that, in embodiments of this application, the RRC connected state may be briefly referred to as a "connected state", the RRC idle state may be briefly referred to as an "idle state", and the RRC inactive state may be briefly referred to as an "inactive state".

(2) Small data transmission mechanism (small data transmission, SDT) mechanism: The SDT mechanism is specified in NR, and supports small data transmission of a terminal device in an inactive state. The SDT mechanism can enable the terminal device (for example, an IoT device) in the inactive state to complete data transmission without performing RRC state switching. Therefore, signaling overheads can be significantly reduced, and beneficial effect such as energy saving and fast data transmission can be implemented.

The SDT mechanism is classified into two types: one is random access SDT (random access SDT, RA-SDT), and the other is configured grant SDT (configured grant SDT, CG-SDT).

A first type of SDT mechanism, namely, the RA-SDT, refers to a case in which a terminal device has no dedicated radio resource, and a random access message (random access message) can collide or conflict with a random access message sent by another RA-SDT device. The RA-SDT device also obtains a radio resource for a random access procedure from a system information (system information) message, which is similar to that of a non-RA-SDT device. However, random access radio resources of the RA-SDT device and the non-RA-SDT device are separated, that is, the RA-SDT device and the non-RA-SDT device do not interfere with each other during random access. The RA-SDT procedure may be a two-step or four-step random access procedure. Payload data (payload data) that needs to be transmitted in a two-step random access procedure is sent together with an initial random access request. In a four-step random access procedure, the terminal device first resolves a contention conflict through a random access request and a random access response, and then sends payload data through an RRC resume request.

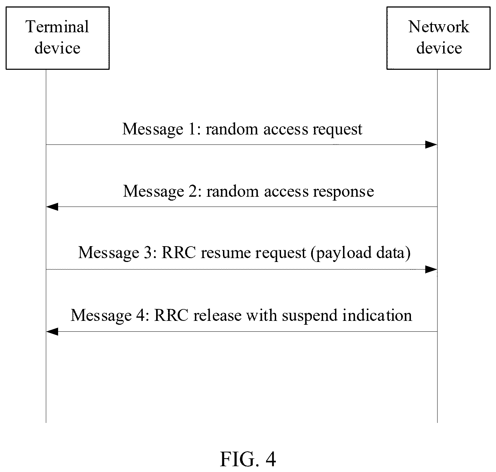

As shown in FIG. 3, in the two-step random access procedure, the following are included: A terminal device sends a random access request (random access request), namely, a message A (MsgA), to a network device, where sending the message A may also be referred to as sending a physical random access channel (physical random access channel, PRACH) preamble (preamble) to the network device, and the message A may further include an RRC resume request (RRC resume request) and payload data (payload data). The terminal device receives a random access response (random access response, RAR), namely, a message B (MsgB), from the network device, where the message B may include an RRC release with suspend (RRC release with suspend) indication, to indicate the terminal device to remain in an inactive state. As shown in FIG. 4, in the four-step random access procedure, the following are included: A terminal device sends a random access request, namely, a message 1 (Msg1), to a network device, where the message 1 may include a random access preamble. The terminal device receives a random access response, namely, a message 2 (Msg2), from the network device, where the message 2 may include a random access preamble, a resource used to send data, and the like. The terminal device sends an RRC resume request (RRC resume request), namely, a message 3 (Msg3), to the network device, where the message 3 may include payload data, or the payload data and the message 3 are sent together (for example, in parallel). The terminal device receives an RRC release with suspend (RRC release with suspend) indication from the network device, namely, a message 4 (Msg4), where the message 4 indicates the terminal device to remain in an inactive state. It can be learned from the content shown in FIG. 3 and FIG. 4 that the terminal device remains in the RRC inactive state in an entire process, and the random access procedure does not cause the RRC status of the terminal device to be switched.

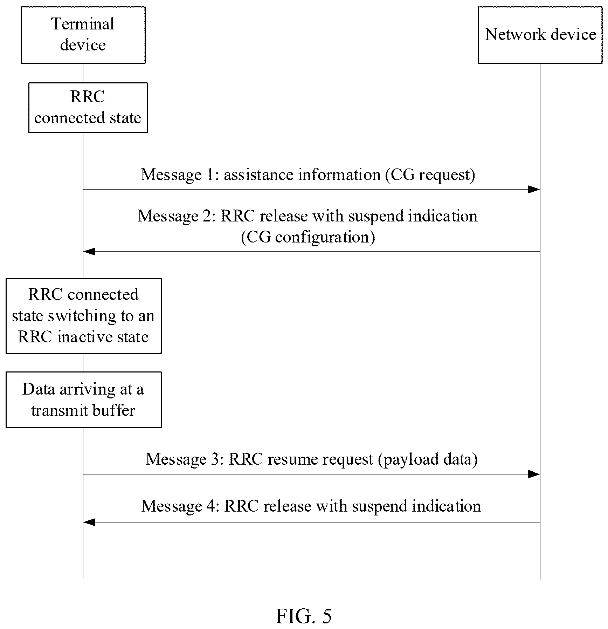

A second type of SDT mechanism, namely, the CG-SDT mechanism, means that a radio resource is periodically allocated based on estimation of a traffic requirement of the terminal device. This uplink scheduling method is referred to as configured grant. Using the CG-SDT does not cause a message conflict with another terminal device because a radio resource is dedicated to each device. When the terminal device exits the RRC connected state, the network device sends a resource allocation signal to the terminal device. As shown in FIG. 5, a terminal device in an RRC connected state sends assistance information (assistance information) to a network device, and a CG request (request) may be included. The network device sends an RRC release with suspend indication to the terminal device, and the RRC release with suspend indication may include a CG configuration (CG configuration), used to configure a CG resource. After receiving the RRC release with suspend indication, the terminal device switches from the RRC connected state to an RRC inactive state. When data of the terminal device arrives at a transmit buffer (tx buffer), that is, when the terminal device has to-be-transmitted data, the terminal device may send an RRC resume request to the network device on the CG resource. The RRC resume request may include payload data, or the payload data and the RRC resume request are sent together. The terminal device receives the RRC release with suspend indication from the network device, and remains in the RRC inactive state.

Currently, in a future-oriented intelligent inclusive scenario, a cloud (for example, a central node of cloud computing), an edge (for example, an edge device of cloud computing), and a device (for example, a terminal device) of a network need to collaborate to perform task processing. However, existing task processing requires that the terminal device be in the connected state. Therefore, a terminal device in an inactive state needs to switch to the connected state to complete task processing. Frequent state switching causes problems such as a long delay, high signaling overheads, and high energy consumption. Therefore, how to reduce a delay, signaling overheads, and energy consumption of performing task processing by the terminal device is a problem that needs to be considered.

Based on this, this application provides a task processing method and an apparatus, to support a terminal device in performing task processing in an inactive state, and reduce a delay, signaling overheads, and energy consumption of performing task processing by the terminal device. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit sizes, content, a sequence, a time sequence, priorities, importance degrees, or the like of the plurality of objects. For example, first task data and second task data do not indicate different priorities, importance degrees, or the like corresponding to the two pieces of task data.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates: a, b, c, a and b, a and c, b and c, or a, b, and c, where a, b, and c may be singular or plural.

The task processing method provided in embodiments of this application may be performed by a first communication apparatus and a second communication apparatus. The first communication apparatus may be a terminal device, a component (for example, a processor, a chip, or a chip system) of a terminal device, or an apparatus used in combination with a terminal device; and the second communication apparatus may be a network device, a component (for example, a processor, a chip, or a chip system) of a network device, or an apparatus used in combination with a network device. Alternatively, the first communication apparatus may be a network device, a component (for example, a processor, a chip, or a chip system) of a network device, or an apparatus used in combination with a network device; and the second communication apparatus may be a terminal device, a component (for example, a processor, a chip, or a chip system) of a terminal device, an apparatus used in combination with a terminal device, or the like.

The following first describes the method provided in this application by using an example in which the first communication apparatus and the second communication apparatus are respectively a terminal device and a network device. It should be understood that the terminal device may alternatively be a component (for example, a processor, a chip, or a chip system) of the terminal device or an apparatus used in combination with the terminal device, and the network device may alternatively be a component (for example, a processor, a chip, or a chip system) of the network device or an apparatus used in combination with the network device.

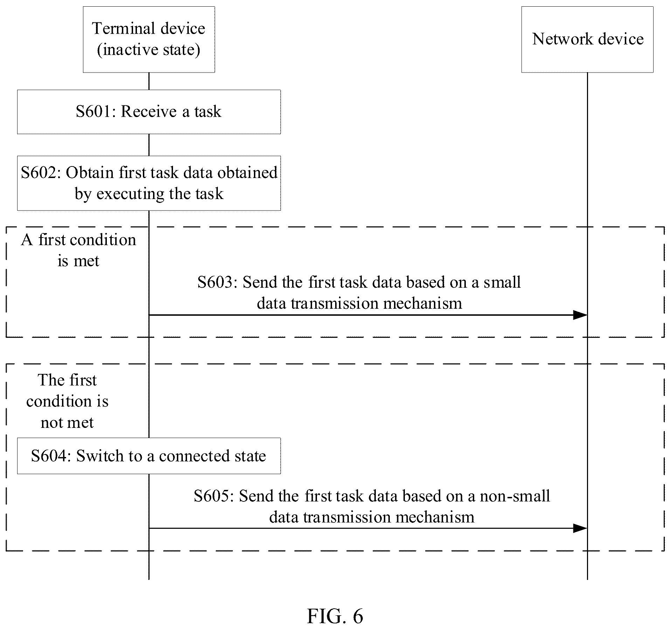

FIG. 6 is a diagram 1 of a task processing method according to an embodiment of this application. The method includes the following steps.

S601: A terminal device receives a task.

The terminal device is in an inactive state, and the task is a non-session task.

S602: The terminal device obtains first task data obtained by executing the task.

In embodiments of this application, the related task is a non-session task, namely, a non-conventional data transmission task (or service), for example, a data transmission task such as non-audio data transmission or video data transmission. The related task may be a new computing service such as artificial intelligence (artificial intelligence, AI) and perception. At a network layer, the related task may be a process of completing a specific objective through multidimensional resource collaboration, for example, a process of completing a specific objective through collaboration and orchestration of connections, computing, data, and algorithm resources in a multi-node scenario. Tasks may be classified into task types such as AI training, AI inference, computing, and data processing based on different objectives.

The task may be triggered by an internal event of the terminal device, or may be triggered by an external event, or the like. For example, the task is triggered by the internal event. When collection duration of collecting a type of data or collecting data of one or more sensors reaches a specified duration threshold, the terminal device may trigger a task for the terminal device to perform data processing on the collected data and report a processing result to the network device. For example, the task is triggered by the external event. The network device or the like may deliver one or more tasks (such as an AI inference task or an AI training task) to the terminal device through non-access stratum (non-access stratum, NAS) signaling or RRC signaling, or a third party (for example, an application server) may deliver one or more tasks or the like to an application of the terminal device.

After receiving the task, the terminal device may execute the task, and may obtain the first task data obtained by executing the task.

For example, the task is the AI training task. The terminal device may extract, as task data, parameters such as a weight and a bias in an AI model that are obtained through the AI training task, or extract, as task data, a variation of parameters such as a weight and a bias in an AI model after a to-be-trained AI model executes the AI training task relative to those before the AI training task is executed, or the like. For example, the task is the AI inference task. The terminal device may extract, as task data, an inference result obtained by executing the AI inference task. Similarly, when the task is a data processing task, the terminal device may extract a data processing result of the data processing task as task data; and when the task is a computing task, the terminal device may extract a computing result as task data.

In addition, to further reduce transmission overheads of the task data, the first communication apparatus may further perform processing such as compression and/or pruning on the obtained first task data.

In an example, the terminal device may obtain, by using an AI-based semantic extraction technology, the first task data obtained by executing the task, and may further compress and/or filter, by using technologies such as AI compression and/or AI pruning, a data volume of the obtained first task data.

It should be understood that, in embodiments of this application, the terminal device may receive one or more tasks. When the terminal device receives a plurality of tasks, the terminal device may separately obtain first task data obtained by executing each task.

S603: When sending of the first task data meets a first condition, the terminal device sends the first task data to the network device based on a small data transmission mechanism, and correspondingly, the network device receives the first task data.

In this embodiment of this application, the first condition may also be referred to as a small data transmission mechanism enabling determining condition. When the task data that needs to be sent meets the first condition, the terminal device may send the task data based on the small data transmission mechanism.

In a possible implementation, the first condition may include that a volume of to-be-transmitted data (for example, a data volume of to-be-sent task data) is less than or equal to a first threshold. The first threshold may be determined based on a transmission data volume threshold of the small data transmission mechanism (sdt-DataVolumeThreshold), and the first threshold may be less than or equal to the transmission data volume threshold of the small data transmission mechanism.

For example, the terminal device sends the first task data to the network device based on the small data transmission mechanism. In this case, the data volume of the first task data should be less than or equal to the first threshold.

It may be understood that the terminal device may receive one or more tasks. When the terminal device receives a plurality of tasks, if a plurality of pieces of task data corresponding to the plurality of tasks are sent together based on the small data transmission mechanism, a total data volume of the plurality of pieces of task data corresponding to the plurality of tasks should be less than or equal to the first threshold; or if the plurality of pieces of task data corresponding to the plurality of tasks are sent separately based on the small data transmission, a data volume of task data corresponding to each task in the plurality of tasks should be less than or equal to the first threshold.

When the terminal device receives the plurality of tasks, whether the plurality of pieces of task data corresponding to the plurality of tasks are sent together based on the small data transmission mechanism, or sent separately based on the small data transmission mechanism may be determined by the terminal device based on an indication of the network device, a protocol specification, a configured sending policy, or the like. For example, the configured sending policy may specify that when the terminal device receives a plurality of tasks, a plurality of pieces of task data corresponding to the plurality of tasks are sent together based on the small data transmission mechanism; or may specify that when the terminal device receives a plurality of tasks, a plurality of pieces of task data corresponding to the plurality of tasks are sent separately based on the small data transmission mechanism; or may specify that when the terminal device receives a plurality of tasks, if a total data volume of a plurality of pieces of task data corresponding to the plurality of tasks is less than or equal to the first threshold, the plurality of pieces of task data corresponding to the plurality of tasks are sent together based on the small data transmission mechanism, and if the total data volume of the plurality of pieces of task data corresponding to the plurality of tasks is greater than the first threshold, but a data volume of task data corresponding to each task is less than the first threshold, the plurality of pieces of task data of the plurality of tasks are sent separately based on the small data transmission mechanism.

For example, the terminal device sends, based on the small data transmission mechanism, a plurality of pieces of first task data corresponding to the plurality of tasks to the network device. When the plurality of pieces of first task data are sent together based on the small data transmission mechanism, a total data volume of the plurality of pieces of first task data should be less than or equal to the first threshold. When the plurality of pieces of first task data are sent separately based on the small data transmission mechanism, a data volume of each piece of first task data in the plurality of pieces of first task data should be less than or equal to the first threshold.

In embodiments of this application, the volume of the to-be-transmitted data and the first threshold may be further set based on a specific task.

For example, in AI-related tasks such as AI training and AI inference, task data (namely, model data) transmitted through an air interface between the terminal device and the network device may be a token (token) or an embedding (embedding) vector. In AI, embedding is a process of mapping high-dimensional data (for example, a text, a picture, or audio) to low-dimensional space. The embedding vector is usually a vector including real numbers, represents input data as a point in continuous numerical space, and can be used to represent almost anything, for example, a text, a picture, and audio. The token may be referred to as an identifier, a mark, or the like. In the AI, the token is usually a minimum unit in a text processing process. The token may be a word, a phrase, a sentence, another smaller text unit, or the like. One embedding vector may include one or more tokens. Therefore, for AI-related tasks such as AI training and AI inference, a volume of to-be-transmitted data (namely, a data volume of task data) may be a token quantity or an embedding vector dimension, and a corresponding first threshold may also be a token quantity threshold or an embedding vector dimension threshold. In this case, for the AI-related tasks such as the AI training and the AI inference, that the data volume of the first task data is less than or equal to the first threshold may alternatively be represented as that a token quantity corresponding to the first task data is less than or equal to the token quantity threshold, or an embedding vector dimension corresponding to the first task data is less than or equal to the embedding vector dimension threshold.

In some embodiments, the first condition may further include that quality of a channel between the terminal device and the network device is greater than or equal to a channel quality threshold of the small data transmission mechanism, to ensure that the quality of the channel meets a requirement for sending the task data based on the small data transmission mechanism.

The quality of the channel may be one or more of reference signal received power (reference signal received power, RSRP), reference signal received quality (reference signal received quality, RSRQ), and the like of a reference signal received by the terminal device from the network device. The channel quality threshold of the small data transmission mechanism may be one or more of an RSRP threshold and an RSRQ threshold.

When sending of the first task data corresponding to the task meets the first condition, the terminal device may send the first task data to the network device based on the small data transmission mechanism.

In embodiments of this application, the small data transmission mechanism may be an RA-SDT mechanism, a CG-SDT mechanism, or the like. The RA-SDT mechanism may include a two-step RA-SDT mechanism and a four-step RA-SDT mechanism.

For example, the terminal device sends the first task data to the network device based on the two-step RA-SDT mechanism. The terminal device may initiate a two-step random access procedure, and send the first task data to the network device through a random access request in the two-step random access procedure (namely, a message A in the two-step random access procedure). For specific implementation, refer to the description of the two-step random access procedure in FIG. 3. Details are not described again.

For example, the terminal device sends the first task data to the network device based on the four-step RA-SDT mechanism. The terminal device may initiate a four-step random access procedure, and send the first task data to the network device through an RRC resume request in the four-step random access procedure (namely, a message 3 in the four-step random access procedure). For specific implementation, refer to the description of the four-step random access procedure in FIG. 4. Details are not described again.

For example, the terminal device sends the first task data to the network device based on the CG-SDT mechanism. The terminal device may initiate an RRC connection establishment/activation procedure, and send the first task data to the network device through the RRC resume request (namely, a message 3 in the CG-SDT mechanism) sent to the network device on a configured grant resource. For specific implementation, refer to the description of the RA-SDT mechanism in FIG. 5. Details are not described again.

In some implementations, after receiving the first task data from the terminal device, the network device may further send reception acknowledgment information to the terminal device based on the small data transmission mechanism, to indicate that the network device has received the task data. A reception acknowledgment message may be sent through a message B in the two-step random access procedure, a message 4 in the four-step random access procedure, a message 4 in the CG-SDT mechanism, or the like.

In some implementations, after receiving the task and before sending the first task data corresponding to the task to the network device, the terminal device may further send a task initiation request to the network device based on the small data transmission mechanism, where the task initiation request carries a task identifier of the task, and receive a task acknowledgment response that is sent by the network device based on the small data transmission mechanism and that includes the task identifier of the task, to determine that the network device has learned of the task executed by the terminal device.

The terminal device may send the task initiation request to the network device through the message A in the two-step random access procedure, the message 1 or the message 3 in the four-step random access procedure, the message 3 in the CG-SDT mechanism, or the like, and receive the task acknowledgment response sent by the network device through the message B in the two-step random access procedure, the message 2 or the message 4 in the four-step random access procedure, the message 4 in the CG-SDT mechanism, or the like. In addition, the task identifier (for example, a task (task) ID) of the task may be an index, a serial number, an indicator (indicator), or the like of the task. The task identifier may also include a task type identifier of the task. For example, the task identifier of the task may include a task type index of the task and an index of the task in the task type.

S604: When sending of the first task data does not meet the first condition, the terminal device switches to a connected state.

S605: The terminal device sends the first task data to the network device based on a non-small data transmission mechanism, and correspondingly, the network device receives the first task data.

In an example, when sending of the first task data does not meet the first condition, the terminal device in the inactive state may send the RRC resume request to the network device. After receiving the RRC resume request from the terminal device, the network device may determine whether the RRC resume request is a message sent by the terminal device based on the small data transmission mechanism (for example, the message A in the two-step random access procedure in FIG. 3, the message 3 in the four-step random access procedure in FIG. 4, and the message 3 in the CG-SDT mechanism in FIG. 5) based on whether the RRC resume request is sent together with the task data (namely, the payload data). When the RRC resume request is not sent together with the task data (namely, the payload data), the network device may determine that the RRC resume request is not a message sent by the terminal device based on the small data transmission mechanism, and the network device may send an RRC resume response to the terminal device. After receiving the RRC resume response from the network device, the terminal device may resume an RRC connection to the network device, and switch from the inactive state to the connected state. After the terminal device switches from the inactive state to the connected state, the terminal device may send the first task data to the terminal device through an RRC link established between the terminal device and the network device, to ensure reliable transmission of the task data.

It may be understood that the task processing method in this application may be applied to a single-task scenario, a multi-task scenario, and the like. The following describes the task processing method in this application with reference to different scenarios.

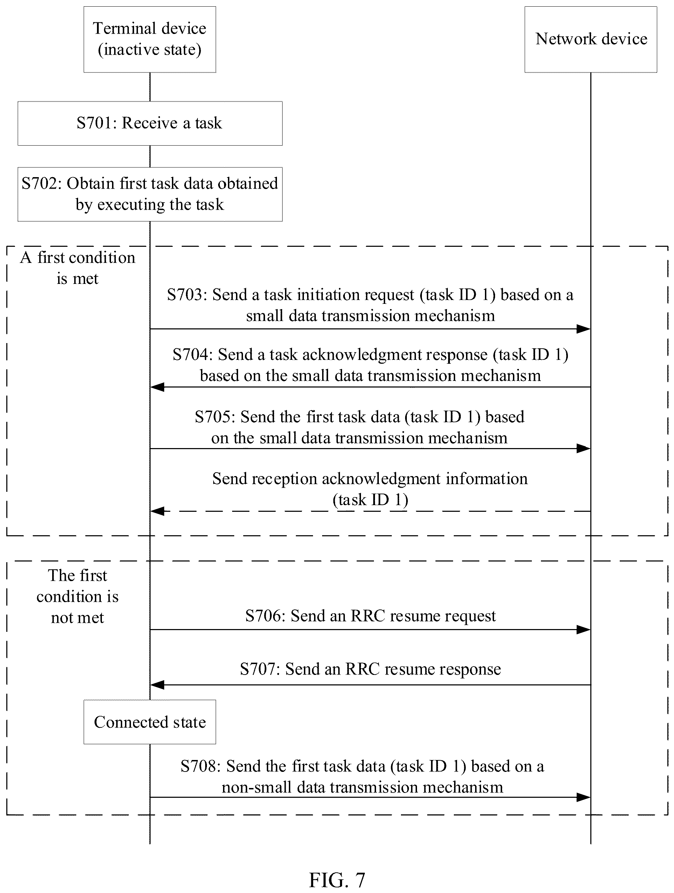

Scenario 1: For example, a terminal device side initiates a single task. FIG. 7 is a diagram 2 of a task processing method according to an embodiment of this application. The method includes the following steps.

S701: A terminal device receives a task.

The terminal device is in an inactive state, and the task is a non-session task.

S702: The terminal device obtains first task data obtained by executing the task.

For implementations of S701 and S702, refer to the implementations of S601 and S602. Details are not described again.

S703: When sending of the first task data meets a first condition, the terminal device sends a task initiation request to a network device based on a small data transmission mechanism, and correspondingly, the network device receives the task initiation request.

The task initiation request carries a task identifier of the task. In FIG. 7, for example, the task identifier that is of the task and that is received by the terminal device is a task ID 1.

S704: The network device sends a task acknowledgment response to the terminal device based on the small data transmission mechanism, and correspondingly, the terminal device receives the task acknowledgment response.

The task acknowledgment response carries the task identifier of the task. In FIG. 7, for example, the task identifier that is of the task and that is received by the terminal device is the task ID 1.

In a possible implementation, the terminal device may send the task initiation request to the network device through a message A in a two-step random access procedure, a message 1 or a message 3 in a four-step random access procedure, a message 3 in a CG-SDT mechanism, or the like, and receive the task acknowledgment response sent by the network device through a message B in the two-step random access procedure, a message 2 or a message 4 in the four-step random access procedure, a message 4 in the CG-SDT mechanism, or the like.

It should be understood that, when sending of the first task data meets the first condition, the terminal device may alternatively directly perform S705 to send the first task data, that is, the terminal device may not perform S703 and S704.

S705: The terminal device sends the first task data to the network device based on the small data transmission mechanism, and correspondingly, the network device receives the first task data.

Optionally, after receiving the first task data from the terminal device, the network device may further send reception acknowledgment information to the terminal device based on the small data transmission mechanism, to indicate that the first task data has been received.

In some implementations, when sending the first task data to the network device based on the small data transmission mechanism, the terminal device may send the first task data together with the task identifier (for example, the task ID 1) corresponding to the first task data, so that the network device quickly learns of a task to which the first task data belongs, and processes the first task data. The reception acknowledgment information sent by the network device to the terminal device may also include the task identifier (for example, the task ID 1) corresponding to the received first task data, so that the terminal device quickly learns of information about whether the first task data is successfully sent.

S706: When sending of the first task data does not meet the first condition, the terminal device sends an RRC resume request to the network device, and correspondingly, the network device receives the RRC resume request.

S707: The network device sends an RRC resume response to the terminal device, and correspondingly, the terminal device receives the RRC resume response.

S708: The terminal device sends the first task data to the network device based on a non-small data transmission mechanism.

When sending of the first task data does not meet the first condition, the terminal device in the inactive state may send the RRC resume request to the network device. After receiving the RRC resume request from the terminal device, the network device may determine whether the RRC resume request is a message sent by the terminal device based on the small data transmission mechanism (for example, the message A in the two-step random access procedure in FIG. 3, the message 3 in the four-step random access procedure in FIG. 4, and the message 3 in the CG-SDT mechanism in FIG. 5) based on whether the RRC resume request is sent together with the task data (namely, payload data). When the RRC resume request is not sent together with the task data (namely, the payload data), the network device may determine that the RRC resume request is not a message sent by the terminal device based on the small data transmission mechanism, and the network device may send an RRC resume response to the terminal device. After receiving the RRC resume response from the network device, the terminal device may resume an RRC connection to the network device, and switch from the inactive state to the connected state. After the terminal device switches from the inactive state to the connected state, the terminal device may send the first task data through an RRC link established between the terminal device and the network device, to ensure reliable transmission of the task data.

It may be understood that, when the terminal device sends the first task data to the network device through the RRC link established between the terminal device and the network device, the task identifier (for example, the task ID 1) corresponding to the first task data may also be carried, so that the network device quickly learns of the task to which the task data belongs, and processes the task data.

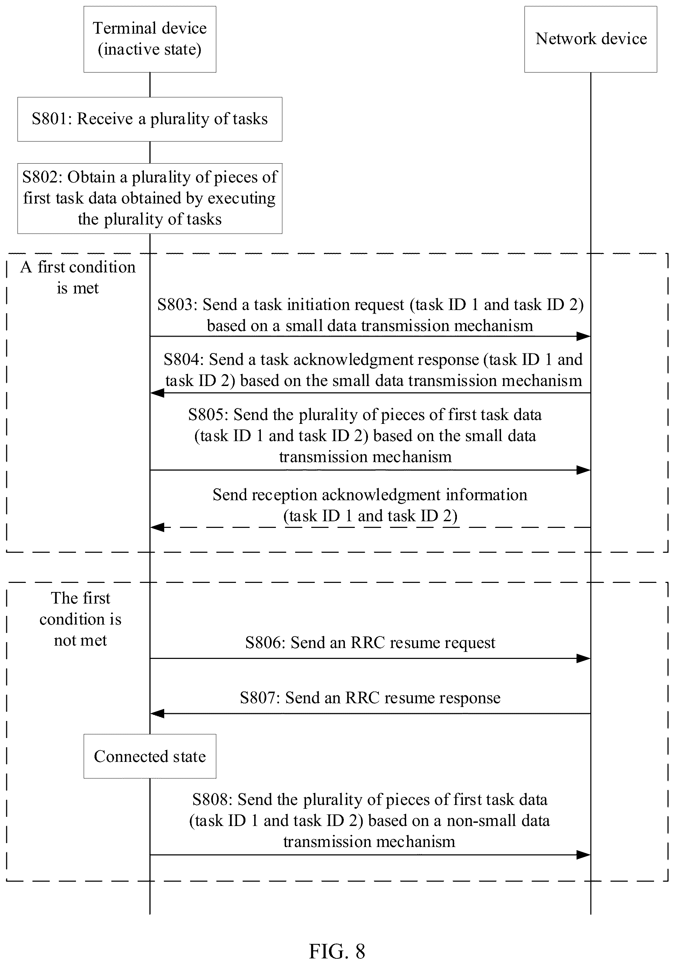

Scenario 2: For example, a terminal device side initiates a plurality of tasks. FIG. 8 is a diagram 3 of a task processing method according to an embodiment of this application. The method includes the following steps.

S801: A terminal device receives a plurality of tasks.

The terminal device is in an inactive state, and the plurality of tasks are non-session tasks.

S802: The terminal device obtains a plurality of pieces of first task data obtained by executing the plurality of tasks.

When sending of the plurality of pieces of first task data meets a first condition, S803 to S805 are performed. When sending of the plurality of pieces of first task data does not meet the first condition, S806 to S808 are performed.

For implementations of S801 and S802, refer to the implementations of S601 and S602. Details are not described again.

S803: When sending of the plurality of pieces of first task data meets the first condition, the terminal device sends a task initiation request to a network device based on a small data transmission mechanism, and correspondingly, the network device receives the task initiation request.

The task initiation request carries task identifiers of the plurality of tasks. In FIG. 8, for example, the terminal device receives two tasks, and task identifiers of the two tasks are respectively a task ID 1 and a task ID 2.

S804: The network device sends a task acknowledgment response to the terminal device based on the small data transmission mechanism, and correspondingly, the terminal device receives the task acknowledgment response.

The task acknowledgment response carries the task identifiers of the plurality of tasks. In FIG. 8, for example, the terminal device receives two tasks, and the task identifiers of the two tasks are respectively the task ID 1 and the task ID 2.

In a possible implementation, the terminal device may send the task initiation request to the network device through a message A in a two-step random access procedure, a message 1 or a message 3 in a four-step random access procedure, a message 3 in a CG-SDT mechanism, or the like, and receive the task acknowledgment response sent by the network device through a message B in the two-step random access procedure, a message 2 or a message 4 in the four-step random access procedure, a message 4 in the CG-SDT mechanism, or the like.

It should be understood that, when sending of the plurality of pieces of first task data meets the first condition, the terminal device may directly perform S805 to send the plurality of pieces of first task data, that is, the terminal device may not perform S803 and S804.

S805: The terminal device sends the plurality of pieces of first task data to the network device based on the small data transmission mechanism, and correspondingly, the network device receives the plurality of pieces of first task data.

Optionally, after receiving the plurality of pieces of first task data from the terminal device, the network device may further send reception acknowledgment information to the terminal device based on the small data transmission mechanism, to indicate that the plurality of pieces of first task data have been received.

In some implementations, when sending the plurality of pieces of first task data to the network device based on the small data transmission mechanism, the terminal device may send each piece of first task data together with the task identifier corresponding to the first task data, so that the network device quickly learns of a task to which each piece of first task data belongs, and processes the first task data. The reception acknowledgment information sent by the network device to the terminal device may also include the task identifier corresponding to each piece of received first task data, so that the terminal device quickly learns of information about whether each piece of first task data is successfully sent.

In an example, the terminal device receives two tasks, where the task identifiers of the two tasks are the task ID 1 and the task ID 2, first task data corresponding to a task of the task ID 1 of the terminal device is first task data 1, and first task data corresponding to a task of the task ID 2 is first task data 2. The terminal device may send the first task data 1 and the task ID 1, and the first task data 2 and the task ID 2 to the network device based on the small data transmission mechanism. After receiving the first task data 1 and the task ID 1, and the first task data 2 and the task ID 2 from the terminal device, the network device may further send, to the terminal device based on the small data transmission mechanism, the reception acknowledgment information including the task ID 1 and the task ID 2, to indicate that the first task data 1 and the first task data 2 have been received.

S806: When sending of the plurality of pieces of first task data does not meet the first condition, the terminal device sends an RRC resume request to the network device, and correspondingly, the network device receives the RRC resume request.

S807: The network device sends an RRC resume response to the terminal device, and correspondingly, the terminal device receives the RRC resume response.

S808: The terminal device sends the plurality of pieces of first task data to the network device based on a non-small data transmission mechanism, and correspondingly, the network device receives the at least one piece of first task data.

When sending of the plurality of pieces of first task data does not meet the first condition, the terminal device in the inactive state may send the RRC resume request to the network device. After receiving the RRC resume request from the terminal device, the network device may determine whether the RRC resume request is a message sent by the terminal device based on the small data transmission mechanism (for example, the message A in the two-step random access procedure in FIG. 3, the message 3 in the four-step random access procedure in FIG. 4, and the message 3 in the CG-SDT mechanism in FIG. 5) based on whether the RRC resume request is sent together with the task data (namely, payload data). When the RRC resume request is not sent together with the task data (namely, the payload data), the network device may determine that the RRC resume request is not a message sent by the terminal device based on the small data transmission mechanism, and the network device may send the RRC resume response to the terminal device. After receiving the RRC resume response from the network device, the terminal device may resume an RRC connection to the network device, and switch from the inactive state to the connected state. After the terminal device switches from the inactive state to the connected state, the terminal device may send the plurality of pieces of first task data through an RRC link established between the terminal device and the network device, to ensure reliable transmission of the task data.

It may be understood that when the terminal device sends the plurality of pieces of first task data to the network device through the RRC link established between the terminal device and the network device, task identifiers (for example, the task ID 1 corresponding to the first task data 1 and the task ID 2 corresponding to second task data) corresponding to the plurality of pieces of first task data may also be carried, so that the network device quickly learns of a task to which the task data belongs, and processes the task data.

In some implementations, a task may be executed for a plurality of rounds, and there are a plurality of rounds of task data need to be sent. Because sending of a specific round of task data does not meet the first condition, the terminal device may alternatively switch from the inactive state to the connected state to continue to execute the task and send the task data.

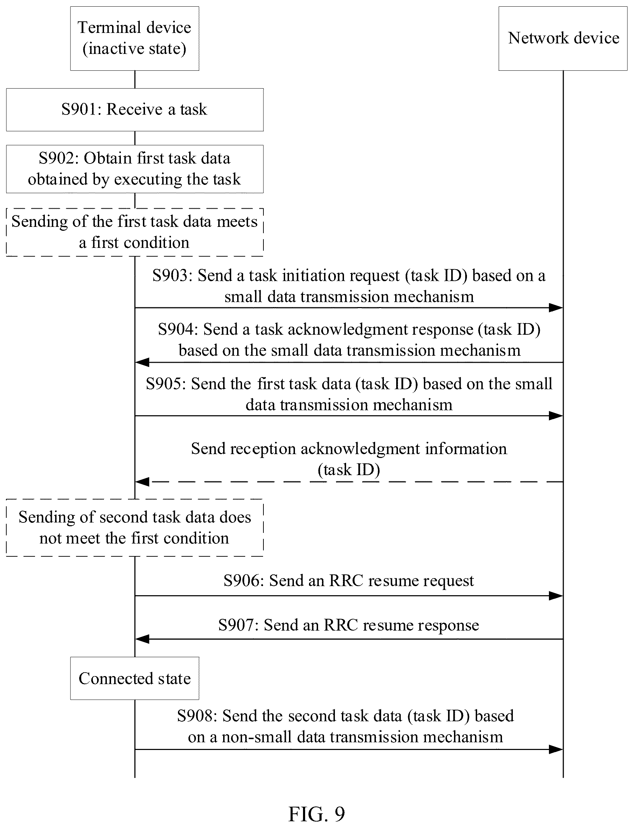

Scenario 3: For example, a terminal device side initiates a task, and in a sending process of task data of the task, because sending of a specific round of task data does not meet the first condition, a terminal device switches from an inactive state to a connected state, and then continues to execute the task to send the task data. FIG. 9 is a diagram 4 of a task processing method according to an embodiment of this application. The method includes the following steps.

S901: A terminal device receives a task.

The terminal device is in an inactive state, and the task is a non-session task.

S902: The terminal device obtains first task data obtained by executing the task.

S903: When sending of the first task data meets a first condition, the terminal device sends a task initiation request to a network device based on a small data transmission mechanism, and correspondingly, the network device receives the task initiation request. The task initiation request carries a task identifier (for example, a task ID) of the task.

S904: The network device sends a task acknowledgment response to the terminal device based on the small data transmission mechanism, and correspondingly, the terminal device receives the task acknowledgment response. The task acknowledgment response carries the task identifier (for example, a task ID) of the task.

For implementations of S901 to S904, refer to implementations of S701 to S704 or S801 to S804. Details are not described again.

S905: The terminal device sends the first task data to the network device based on the small data transmission mechanism, and correspondingly, the network device receives the task data.

Optionally, after receiving the first task data from the terminal device, the network device may further send reception acknowledgment information to the terminal device based on the small data transmission mechanism, to indicate that the first task data has been received.

In some implementations, when sending the first task data to the network device based on the small data transmission mechanism, the terminal device may send the first task data together with a task identifier (for example, a task ID) corresponding to the first task data, so that the network device quickly learns of a task to which the first task data belongs, and processes the first task data. The reception acknowledgment information sent by the network device to the terminal device may also include the task identifier corresponding to the received first task data, so that the terminal device quickly learns of information about whether the first task data is successfully sent.

When the task is executed for a plurality of rounds and there are a plurality of rounds of task data to be sent, the first task data may be an N^{th} round of task data obtained by the terminal device by executing the task, where N is an integer greater than or equal to 1. For example, N may be 1 or 2. In first N rounds of task data obtained by the terminal device by executing the task, sending of each round of task data meets the first condition.

S906: When sending of second task data does not meet the first condition, the terminal device sends an RRC resume request to the network device, and correspondingly, the network device receives the RRC resume request.

S907: The network device sends an RRC resume response to the terminal device, and correspondingly, the terminal device receives the RRC resume response.

S908: The terminal device sends the second task data to the network device based on a non-small data transmission mechanism, and correspondingly, the network device receives the second task data.

In this embodiment of this application, when a task is executed for a plurality of rounds and there are a plurality of rounds of task data to be sent, the terminal device may determine whether sending of each round of task data meets the first condition, or may determine, based on a specified interval cycle or the like, whether sending of task data meets the first condition. When sending of task data (for example, the second task data) does not meet the first condition, the terminal device in the inactive state may send the RRC resume request to the network device. After receiving the RRC resume request from the terminal device, the network device may determine whether the RRC resume request is a message sent by the terminal device based on the small data transmission mechanism (for example, the message A in the two-step random access procedure in FIG. 3, the message 3 in the four-step random access procedure in FIG. 4, and the message 3 in the CG-SDT mechanism in FIG. 5) based on whether the RRC resume request is sent together with the task data (namely, payload data). When the RRC resume request is not sent together with the task data (namely, the payload data), the network device may determine that the RRC resume request is not a message sent by the terminal device based on the small data transmission mechanism, and the network device may send the RRC resume response to the terminal device. After receiving the RRC resume response from the network device, the terminal device may resume an RRC connection to the network device, and switch from the inactive state to the connected state. After the terminal device switches from the inactive state to the connected state, the terminal device may send the second task data through an RRC link established between the terminal device and the network device, to ensure reliable transmission of the task data.

The second task data may be a K^{th} round of task data whose sending does not meet the first condition and that is obtained by the terminal device by executing the task, where K is an integer greater than N.

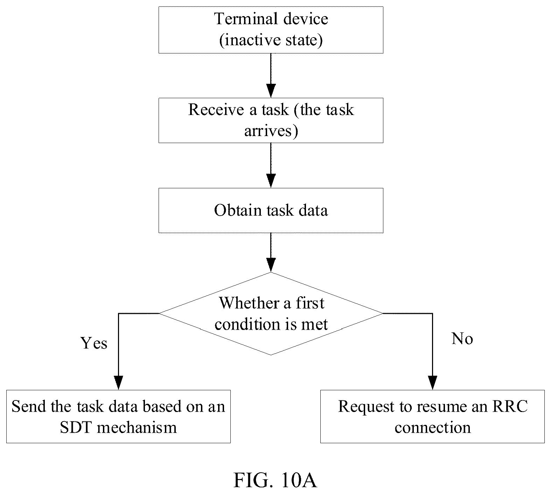

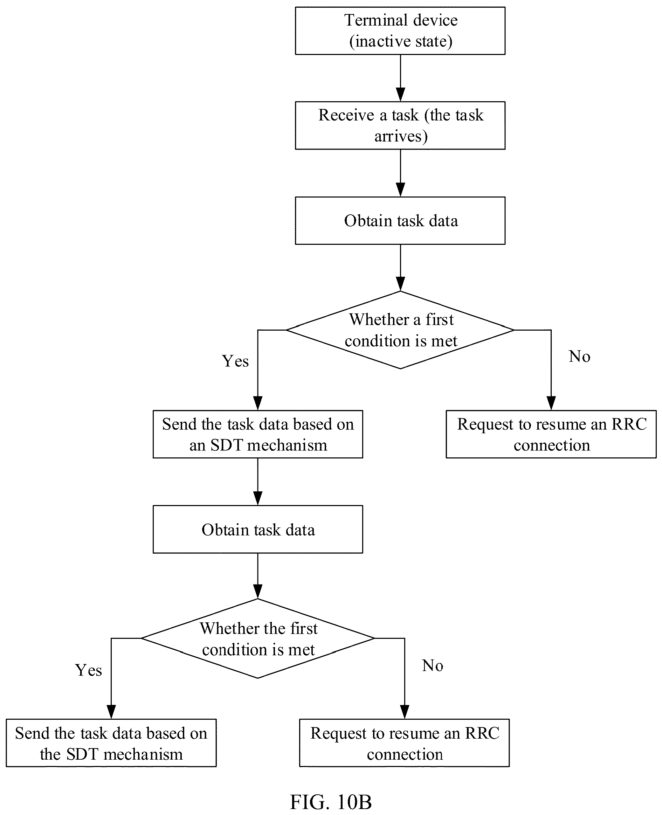

Refer to the task processing mechanism shown in FIG. 10A. According to the task processing method provided in embodiments of this application, when the terminal device participating in the task is in the inactive state, after receiving the task, the terminal device obtains the task data obtained by executing the task, and determines whether sending of the task data meets the first condition. When the first condition is met, the terminal device may send the task data to the network device participating in the task based on the small data transmission mechanism (the SDT mechanism is used as an example in FIG. 10A). When the first condition is not met, the terminal device may send the RRC resume request to the network device, to request to resume the RRC connection, and send the task data after switching to the connected state. In addition, refer to the task processing mechanism shown in FIG. 10B. Based on FIG. 10A, if the task is executed for a plurality of rounds, and there are a plurality of rounds of task data to be sent, and if the terminal device is still in the inactive state after sending a specific round of task data, the terminal device may further determine, before sending each subsequent round of task data or based on a specified cycle before sending subsequent task data, whether sending of task data meets the first condition. When sending of the task data meets the first condition, the terminal device may send, based on the small data transmission mechanism, the task data to the network device participating in the task; and when sending of the task data does not meet the first condition, the terminal device may send the RRC resume request to the network device, to request to resume the RRC connection, and send the task data after switching to the connected state.

In FIG. 6 to FIG. 10B, the task processing method in this application is described mainly by using an example in which the task is initiated on the terminal device side. It may be understood that the task may alternatively be initiated on a network device side. The following describes the task processing method provided in this application by using an example in which a first communication apparatus and a second communication apparatus are respectively a network device and a terminal device. It may be understood that the network device may alternatively be a component (for example, a processor, a chip, or a chip system) of the network device or an apparatus used in combination with the network device. The terminal device may alternatively be a component (for example, a processor, a chip, or a chip system) of the terminal device or an apparatus used in combination with the terminal device.

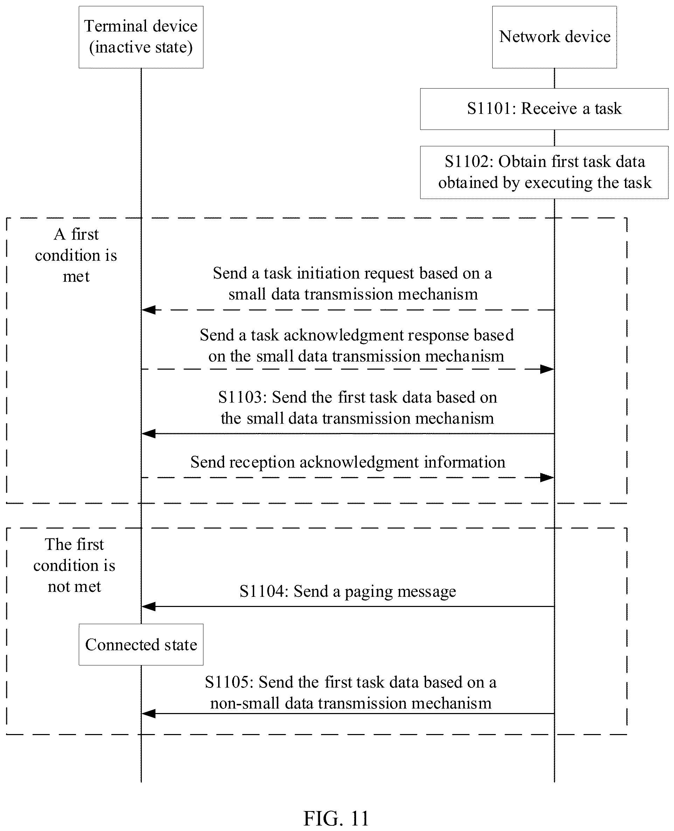

FIG. 11 is a diagram 5 of a task processing method according to an embodiment of this application. The method includes the following steps.

S1101: A network device receives a task.

The task is a non-session task, a participant of the task relates to the network device and a terminal device, and the terminal device is in an inactive state.

In this embodiment of this application, the task may be triggered by an internal event of the network device, or may be triggered by an external event or the like. For example, the task is triggered by the internal event. When duration of collecting channel data between the network device and the terminal device reaches a specified duration threshold, the network device may trigger an AI inference task for channel status adjustment, and the like.

S1102: The network device obtains first task data obtained by executing the task.

In this embodiment of this application, the network device may receive one or more tasks. When the network device receives a plurality of tasks, the network device may separately obtain first task data obtained by executing each task. For an implementation of obtaining, by the network device, the first task data obtained by executing the task, refer to the implementation of obtaining, by the terminal device, the first task data obtained by executing the task in S602. Details are not described again.

S1103: When sending of the first task data meets a first condition, the network device sends the first task data to the terminal device based on a small data transmission mechanism, and correspondingly, the terminal device receives the first task data.

In this embodiment of this application, for an implementation of determining, by the network device, whether sending of the first task data meets the first condition, refer to the implementation of determining, by the terminal device, whether sending of the first task data meets the first condition in S603. Details are not described again.

In an example, the network device may send signaling or a message like a paging message to the terminal device, to trigger the terminal device to switch from the inactive state to a connected state. After receiving the paging message from the network device, the terminal device may send an RRC resume request (for example, send an RRC resume request to the network device on a CG resource, or a message 3 in a CG-SDT mechanism) to the network device. After receiving the RRC resume request from the terminal device, when sending of the first task data meets the first condition, the network device may send the first task data to the terminal device through an RRC release with suspend indication (for example, a message 4 in the CG-SDT mechanism) in response to the RRC resume request. After receiving the RRC release with suspend indication, the terminal remains in the inactive state and does not switch to the connected state.

In some implementations, after receiving the first task data from the network device, the terminal device may further send reception acknowledgment information to the network device based on the small data transmission mechanism, to indicate that the terminal device has received the task data. The reception acknowledgment information may be sent through the message 3 in the CG-SDT mechanism.

In some implementations, after receiving the task and before sending the first task data corresponding to the task to the terminal device, the network device may further send a task initiation request to the terminal device based on the small data transmission mechanism, where the task initiation request carries a task identifier (for example, a task ID) of the task; and receive a task acknowledgment response that is sent by the terminal device based on the small data transmission mechanism and that includes the task identifier of the task, to determine that the terminal device has learned of the task executed by the network device.

The network device may send the task initiation request through the RRC release with suspend indication (for example, the message 4 in the CG-SDT mechanism), and the terminal device may send the task acknowledgment response to the network device through the RRC resume request (for example, the message 3 in the CG-SDT mechanism).

S1104: When sending of the first task data does not meet the first condition, the network device sends a paging (paging) message to the terminal device, and correspondingly, the terminal device receives the paging message. The paging message is used to trigger the terminal device to switch to a connected state.

S1105: After the terminal device switches to the connected state, the network device sends the first task data to the terminal device based on the non-small data transmission mechanism, and correspondingly, the terminal device receives the first task data.

In an example, when sending of the first task data does not meet the first condition, the network device may send the paging message to the terminal device, to trigger the terminal device to switch to the connected state. The terminal device that receives the paging message may send the RRC resume request to the network device. When sending of the first task data does not meet the first condition, the network device may reply to the terminal device with an RRC resume response. After receiving the RRC resume response from the network device, the terminal device may resume an RRC connection to the network device, and switch from the inactive state to the connected state. After the terminal device switches from the inactive state to the connected state, the network device may send the first task data to the terminal device through an RRC link established between the network device and the terminal device, to ensure reliable transmission of the task data.

In some implementations, the task may be executed for a plurality of rounds, and there are a plurality of rounds of task data to be sent. Because sending of a specific round of task data does not meet the first condition, the network device may alternatively indicate the terminal device to switch from the inactive state to the connected state to continue to execute the task and send the task data.

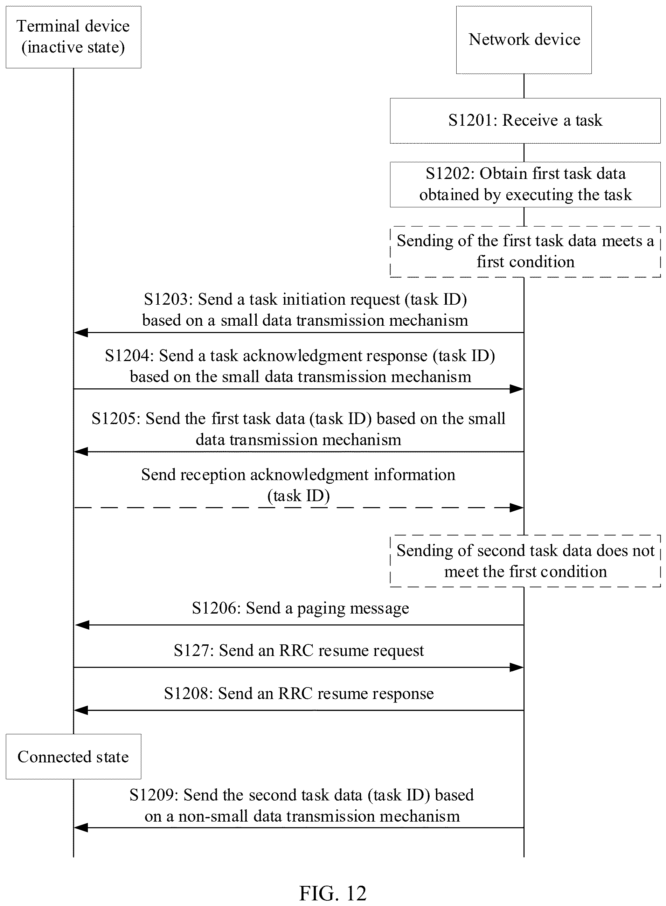

FIG. 12 is a diagram 6 of a task processing method according to an embodiment of this application. The method includes the following steps.

S1201: A network device receives a task.

The task is a non-session task, a participant of the task relates to the network device and a terminal device, and the terminal device is in an inactive state.

S1202: The network device obtains first task data obtained by executing the task.

S1203: When sending of the first task data meets a first condition, the network device sends a task initiation request to the terminal device based on a small data transmission mechanism, and correspondingly, the terminal device receives the task initiation request. The task initiation request carries a task identifier (for example, a task ID) of the task.

S1204: The terminal device sends a task acknowledgment response to the network device based on the small data transmission mechanism, and correspondingly, the network device receives the task acknowledgment response. The task acknowledgment response carries the task identifier (for example, a task ID) of the task.

It should be understood that, when sending of the first task data meets the first condition, the network device may alternatively directly perform S1205 to send the first task data, that is, the network device may not perform S1203 and S1204.

S1205: The network device sends the first task data to the terminal device based on the small data transmission mechanism, and correspondingly, the terminal device receives the task data.

Optionally, after receiving the first task data from the network device, the terminal device may further send reception acknowledgment information to the network device based on the small data transmission mechanism, to indicate that the task data has been received.

In some implementations, when sending the first task data to the terminal device based on the small data transmission mechanism, the network device may send the first task data together with a task identifier (for example, a task ID) corresponding to the first task data, so that the terminal device quickly learns of a task to which the first task data belongs, and processes the first task data. The reception acknowledgment information sent by the terminal device to the network device may also include the task identifier (for example, the task ID) corresponding to the received first task data, so that the network device quickly learns of information about whether the first task data is successfully sent.

When the task is executed for a plurality of rounds and there are a plurality of rounds of task data to be sent, the first task data may be an N^{th} round of task data obtained by the network device by executing the task, where N is an integer greater than or equal to 1. For example, N may be 1 or 2. In first N rounds of task data obtained by the terminal device by executing the task, sending of each round of task data meets the first condition.

S1206: When sending of second task data does not meet the first condition, the network device sends a paging message to the terminal device, and correspondingly, the terminal device receives the paging message.

S1207: The terminal device sends the RRC resume request to the network device, and correspondingly, the network device receives the RRC resume request.

S1208: The network device sends an RRC resume response to the terminal device, and correspondingly, the terminal device receives the RRC resume response.

S1209: The network device sends the second task data to the terminal device based on the non-small data transmission mechanism, and correspondingly, the terminal device receives the second task data.

In this embodiment of this application, when the task is executed for a plurality of rounds and there are a plurality of rounds of task data to be sent, the network device may determine whether sending of each round of task data meets the first condition, or may determine, based on a specified interval cycle or the like, whether sending of task data meets the first condition. When sending of task data (for example, the second task data) does not meet the first condition, the network device may send the paging message to the terminal device, to trigger the terminal device to switch to the connected state. The terminal device that receives the paging message may send the RRC resume request to the network device. When sending of the second task data does not meet the first condition, the network device may reply to the terminal device with the RRC resume response. After receiving the RRC resume response from the network device, the terminal device may resume an RRC connection to the network device, and switch from the inactive state to the connected state. After the terminal device switches from the inactive state to the connected state, the network device may send the second task data to the terminal device through an RRC link established between the network device and the terminal device, to ensure reliable transmission of the task data.

The second task data may be a K^{th} round of task data whose sending does not meet the first condition and that is obtained by the network device by executing the task, where K is an integer greater than N.

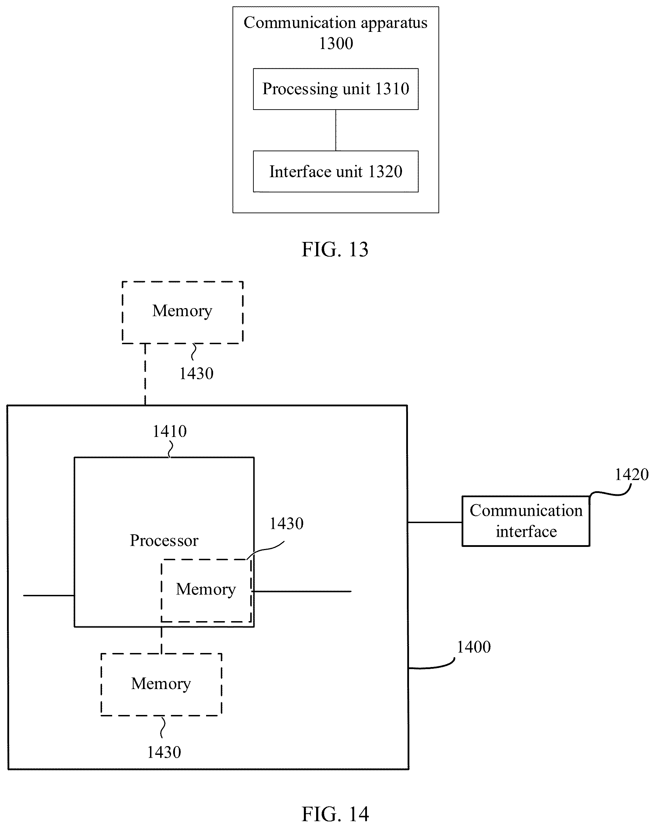

The following describes a communication apparatus provided in embodiments of this application. FIG. 13 is a diagram of a structure of a communication apparatus according to an embodiment of this application. The communication apparatus may include units or modules corresponding to all or a part of steps in the foregoing method embodiments, and may be configured to perform the steps performed by the first communication apparatus or the second communication apparatus in the foregoing embodiments. For details, refer to related descriptions in the foregoing method embodiments.

As shown in FIG. 13, a communication apparatus 1300 includes a processing unit 1310 and an interface unit 1320. The processing unit 1310 may be a processor or a processing circuit, and the interface unit 1320 may further be a transceiver unit or an input/output interface. The communication apparatus 1300 may be configured to implement the steps performed by the first communication apparatus or the second communication apparatus in the foregoing embodiments.

When the communication apparatus 1300 is configured to implement the steps performed by the first communication apparatus in the foregoing embodiments,
the processing unit 1310 is configured to: receive a task, where the task is a non-session task, and a first communication apparatus or a second communication apparatus that participates in the task is in an inactive state; and obtain first task data obtained by executing the task; and
the interface unit 1320 is configured to: when sending of the first task data meets a first condition, send the first task data to the second communication apparatus based on a small data transmission mechanism.

For another implementation, refer to related descriptions of the first communication apparatus or the second communication apparatus in the foregoing embodiments. Details are not described herein again.

As shown in FIG. 14, this application further provides a communication apparatus 1400, including a processor 1410, and may further include a communication interface 1420. The processor 1410 and the communication interface 1420 are coupled to each other. It may be understood that the communication interface 1420 may be a transceiver, an input/output interface, an input interface, an output interface, an interface circuit, or the like. Optionally, the communication apparatus 1400 may further include a memory 1430, configured to: store instructions executed by the processor 1410, or store input data required for running instructions by the processor 1410, or store data generated after the processor 1410 runs instructions. The memory 1430 may be a physically independent unit, or may be coupled to the processor 1410, or the processor 1410 includes the memory 1430.

When the communication apparatus 1400 is configured to implement the steps performed by the first communication apparatus and the second communication apparatus in the foregoing embodiments, the processor 1410 may be configured to implement a function of the processing unit 1310, and the communication interface 1420 may be configured to implement a function of the interface unit 1320.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement embodiments, all or a part of embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In addition, it should be understood that a word "for example" in embodiments of this application represents an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A task processing method, comprising:
receiving, by a first communication apparatus, a task, wherein the task is a non-session task, and the first communication apparatus or a second communication apparatus that participates in the task is in an inactive state;
obtaining, by the first communication apparatus, first task data obtained by executing the task; and
when sending of the first task data meets a first condition, sending, by the first communication apparatus, the first task data to the second communication apparatus based on a small data transmission mechanism.

2. The method according to claim 1, wherein that sending of the first task data meets the first condition comprises:
a data volume of the first task data is less than or equal to a first threshold.

3. The method according to claim 2, wherein the first threshold comprises a token (token) quantity threshold and/or an embedding (embedding) vector dimension threshold, and that the data volume of the first task data is less than or equal to the first threshold comprises:
a quantity of tokens corresponding to the first task data is less than or equal to the token quantity threshold; or
an embedding vector dimension corresponding to the first task data is less than or equal to the embedding vector dimension threshold.

4. The method according to claim 2 or 3, wherein that sending of the first task data meets the first condition further comprises:
quality of a channel between the first communication apparatus and the second communication apparatus is greater than or equal to a channel quality threshold of the small data transmission mechanism.

5. The method according to any one of claims 1 to 4, wherein before sending, by the first communication apparatus, the first task data to the second communication apparatus based on the small data transmission mechanism, the method further comprises:
sending, by the first communication apparatus, a task initiation request to the second communication apparatus based on the small data transmission mechanism, wherein the task initiation request comprises a task identifier of the task; and
receiving, by the first communication apparatus, a task acknowledgment response sent by the second communication apparatus based on the small data transmission mechanism, wherein the task acknowledgment response comprises the task identifier of the task.

6. The method according to any one of claims 1 to 5, wherein the method further comprises:
sending, by the first communication apparatus based on the small data transmission mechanism, the task identifier corresponding to the first task data to the second communication apparatus.

7. The method according to any one of claims 1 to 6, wherein the first communication apparatus is a terminal device, the second communication apparatus is a network device, and sending, by the first communication apparatus, the first task data to the second communication apparatus based on the small data transmission mechanism comprises:
sending, by the first communication apparatus, the first task data to the second communication apparatus through a random access request in a two-step random access procedure; or
sending, by the first communication apparatus, the first task data to the second communication apparatus through a radio resource control RRC resume request in a four-step random access procedure; or
sending, by the first communication apparatus, the first task data to the second communication apparatus through an RRC resume request that is sent to the second communication apparatus on a configured grant resource.

8. The method according to any one of claims 1 to 7, wherein the first communication apparatus is the terminal device, the second communication apparatus is the network device, the first communication apparatus is in the inactive state, and the method further comprises:
when sending of the first task data does not meet the first condition, switching, by the first communication apparatus, to a connected state; and
sending, by the first communication apparatus, the first task data to the second communication apparatus based on a non-small data transmission mechanism.

9. The method according to any one of claims 1 to 7, wherein the first communication apparatus is the terminal device, the second communication apparatus is the network device, the first communication apparatus is in the inactive state, the first task data is an N^{th} round of task data obtained by the first communication apparatus by executing the task, N is an integer greater than or equal to 1, and the method further comprises:
when sending of second task data does not meet the first condition, switching, by the first communication apparatus, to a connected state, wherein the second task data is a K^{th} round of task data obtained by the first communication apparatus by executing the task, and K is an integer greater than N; and
sending, by the first communication apparatus, the second task data to the second communication apparatus based on a non-small data transmission mechanism.

10. The method according to any one of claims 1 to 6, wherein the first communication apparatus is a network device, the second communication apparatus is a terminal device, and sending, by the first communication apparatus, the first task data to the second communication apparatus based on the small data transmission mechanism comprises:
sending, by the first communication apparatus, the first task data to the second communication apparatus through an RRC release with suspend indication, wherein the RRC release with suspend indication is used to respond to an RRC resume request sent by the second communication apparatus.

11. The method according to any one of claims 1 to 6 and claim 10, wherein the first communication apparatus is the network device, the second communication apparatus is the terminal device, the second communication apparatus is in the inactive state, and the method further comprises:
when sending of the first task data does not meet the first condition, sending, by the first communication apparatus, a paging message to the second communication apparatus, wherein the paging message is used to trigger the second communication apparatus to switch to a connected state; and
after the second communication apparatus switches to the connected state, sending, by the first communication apparatus, the first task data to the second communication apparatus based on a non-small data transmission mechanism.

12. The method according to any one of claims 1 to 6 and claim 10, wherein the first communication apparatus is the network device, the second communication apparatus is the terminal device, the second communication apparatus is in the inactive state, the first task data is an N^{th} round of task data obtained by the first communication apparatus by executing the task, N is an integer greater than or equal to 1, and the method further comprises:
when sending of second task data does not meet the first condition, sending, by the first communication apparatus, a paging message to the second communication apparatus, wherein the paging message is used to trigger the second communication apparatus to switch to a connected state, the second task data is a K^{th} round of task data obtained by the first communication apparatus by executing the task, and K is an integer greater than N; and
after the second communication apparatus switches to the connected state, sending, by the first communication apparatus, the second task data to the second communication apparatus based on a non-small data transmission mechanism.

13. The method according to any one of claims 1 to 12, wherein the small data transmission mechanism comprises:
a random access small data transmission mechanism and/or a configured grant small data transmission mechanism.

14. A communication apparatus, comprising a module or a unit configured to perform the method according to any one of claims 1 to 13.

15. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 through a logic circuit or by executing instructions.

16. A computer program product, comprising a computer program or instructions, wherein when the computer program or the instructions are executed by a processor, the method according to any one of claims 1 to 13 is implemented.

17. A chip system, wherein the chip system comprises a processor, the processor is configured to be coupled to a memory, the memory is configured to store a computer program or instructions, and when the computer program or the instructions are executed by the processor, the method according to any one of claims 1 to 13 is implemented.

18. A computer-readable storage medium, wherein the storage medium stores a computer program or instructions, and when the computer program or the instructions are executed by a processor, the method according to any one of claims 1 to 13 is implemented.
